# EUROPEAN PATENT SPECIFICATION

(11) **EP 0 376 988 B1**
(45) Date of publication and mention of the grant of the patent: **20.10.1993**
(21) Application number: 89901776.8
(22) Date of filing: 09.01.1989
(51) Int. Cl.: G02C 1/00, A41D 27/22

(54) **HANGER FOR DISPLAYING EYEGLASSES**
HÄNGEANORDNUNG ZUR VORFÜHRUNG VON BRILLEN
SUPPORT POUR PRESENTOIR DE LUNETTES

(30) Priority: 19.01.1988 US 145222; 01.12.1988 US 278546
(43) Date of publication of application: 11.07.1990
(73) Proprietor: AL-SITE CORP., Miami, FL 33152-0817 (US)
(72) Inventor: NYMAN, Michael, S., Fort Lauderdale, FL 33326 (US)
(74) Representative: Beresford, Keith Denis Lewis
(86) International application number: PCT/US89/00067
(87) International publication number: WO 89/06820

(56) References cited:
- US-A- 212 596
- US-A- 3 116 829
- US-A- 3 710 996
- US-A- 3 799 357
- US-A- 4 441 233
- US-A- 4 502 602
- US-A- 4 702 451
- US-A- 4 724 967

## Description

This invention relates to displays of non-prescription eye glasses and also to eye glasses in combination with hangers for use in such displays.

The invention is particularly applicable to non-prescription eye glasses of the type otherwise known as magnifiers. These are becoming increasingly available at pharmacies and other retail outlets. As contrasted with prescription eye glasses, non-prescription eye glasses are more easily replaced when lost or damaged, are relatively inexpensive and the inconvenience (loss of time) of being examined is avoided, as is the expense of transportation to a doctor's office instead of to a local store.

Typically, without the help of a sales person, a customer selects a pair of non-prescription eye glasses from a display by trying on a number of pairs until he locates a pair that is comfortable both physically and optically. Generally, prior art displays for this type of eye glasses provided an individual cubby hole for each pair of eye glasses, whether boxed or unboxed, or there were individual positioning and holding means provided for each pair of eye glasses. Whenever a customer removed a pair of eye glasses, the display did not exhibit a pair of eye glasses having the same physical size and optical properties as the pair that was removed until a store employee obtained another pair and mounted same on the display. Often this meant that certain eye glasses of particular size and/or optical powers were not on display for substantial portions of the business day.

A different form of display was proposed in US Patent No. 3116829 (Pacelli) which was issued in 1964. This document recognized the desirability of providing for the spectacles a display which meets the three-fold objects of inhibiting pilfering, enabling the prospective purchaser to test fit the eye glasses prior to purchase and permitting display of the eye glasses properly and economically in a manner which is pleasing to the purchasing public. To try to meet these objects, the US patent proposed providing a hanger for each pair of spectacles, which hanger would be suspended removably from a generally horizontal arm supported at one end by a generally vertical support of a display rack. The hanger comprised a transparent pouch shaped to conform to the outline of the eye glasses. The pouch thus comprises first and second compartments for containing the respective lenses and a nose gap between the compartments, with the temples arranged outside the pouch so that they can be opened and the pouch containing the spectacles fitted on to the face of the user. Although this document discloses an attempt to satisfy the above three-fold object, in fact the proposal suffers from the problem that the pouch, although transparent, does interfere with the vision of the prospective purchaser when he tries the spectacles on since he has to try to test his vision through the lenses whilst simultaneously looking through the transparent material of the pouch, and the presence of the pouch impairs the ability of the prospective purchaser to get a reasonable indication of the appearance of the spectacles on his face.

In order to alleviate the above problems, the invention provides, according to a first aspect, a display of non-prescription eye glasses comprising a generally vertical support; a plurality of generally horizontal cantilevered arms each attached at one end to said support and projecting outwardly therefrom; a plurality of non-prescription eye glasses each comprising a pair of lenses, foldable temples and interconnecting bridge means; a plurality of hangers by which said eye glasses are suspended from said arms with the lenses of each said pair of eye glasses spaced apart in a direction which extends generally horizontally and which is transverse to said arms, said suspended eye glasses having their temples folded and the hangers with the respective eye glasses attached thereto being removable from said respective arms and permitting the temples to be unfolded so that the eye glasses can be tried on with the hangers attached thereto; characterised in that each arm supports a plurality of eye glasses of the same type and each hanger is formed of relatively flat sheet-like material and comprises an upper portion engaged with the respective arm in a manner permitting the hanger with its respective eye glasses to be slid along and removed from and replaced on said arm, and a lower portion attached to said eye glasses in a manner leaving the lenses free of said lower portion and permitting the temples to be unfolded without detaching the hanger from the eye glasses so that the eye glasses may be tried on with the hanger remaining attached thereto but without obscuring vision through the lenses.

The cantilevered arms may be of the single or double arm type for example as illustrated in US Patent No. 4502602 issued on 5 March 1985 to R K Swanson.

The above mentioned first portion of the hanger may carry indicia identifying the source of the product, style number, description, size and/or optical characteristics, as contrasted with the stick-on labels that were generally used in the prior art for product identifying information.

Preferably, the hanger is constructed of relatively stiff resilient plastic sheet material and is preferably of rugged construction and not readily removable such that securement of the hanger to the eye glasses serves to reduce the type of pilferage that could occur when a customer could readily remove a stick-on label from a selected pair of eye glasses and could wear the selected pair as he left the store in which they were displayed, without paying for the eye glasses.

In a second aspect, the invention provides a pair of eye glasses in combination with a hanger for suspending the eye glasses in a horizontal orientation from, and generally transverse to, a generally horizontal cantilevered arm of a display rack for forming a display according to the first aspect of the invention defined above, the eye glasses comprising first and second lenses, foldable temples, and interconnecting bridge means; the hanger comprising a first portion for bearing indicia and having therein opening means for suspending the hanger from said cantilevered arm and a second portion which extends downwardly from the first portion and encloses a portion of said eye glasses to secure the eye glasses to the hanger, said temples being outside said second portion so that the temples may be opened and closed and said hanger being constructed so that the eye glasses may be tried on without removing the eye glasses from the hanger and with the first portion of the hanger positioned so as not to obscure vision through the lenses; characterised in that said second portion of the hanger is in the form of a loop which surrounds said interconnecting bridge means leaving the lenses free from said second portion, said loop being such as to prevent removal of the eye glasses from the hanger without opening the loop.

The invention is described further by way of example with reference to the accompanying drawings in which:
Fig. 1 is a perspective of a hanger constructed in accordance with teachings of the instant invention, mounting a pair of eyeglasses on a cantilevered bar that protrudes from a wall of a display device.
Fig. 2 is a cross-section taken through line 2-2 of Fig. 1 looking in the direction of arrows 2-2.
Fig. 3 is a plan view of the main element for a hanger constructed in accordance with teachings of the instant invention.
Fig. 4 is a view similar to that of Fig. 1 illustrating a second embodiment of this invention in which the fastening means is formed integrally with the other portions of the hanger.
Fig. 5 is a side elevation looking in the direction of arrows 6-6 in Fig. 5.
Fig. 7 is a cross-section taken through line 7-7 of Fig. 5 looking in the direction of arrows 7-7.

### DETAILED DESCRIPTION OF THE PREFERRED EMBODIMENT

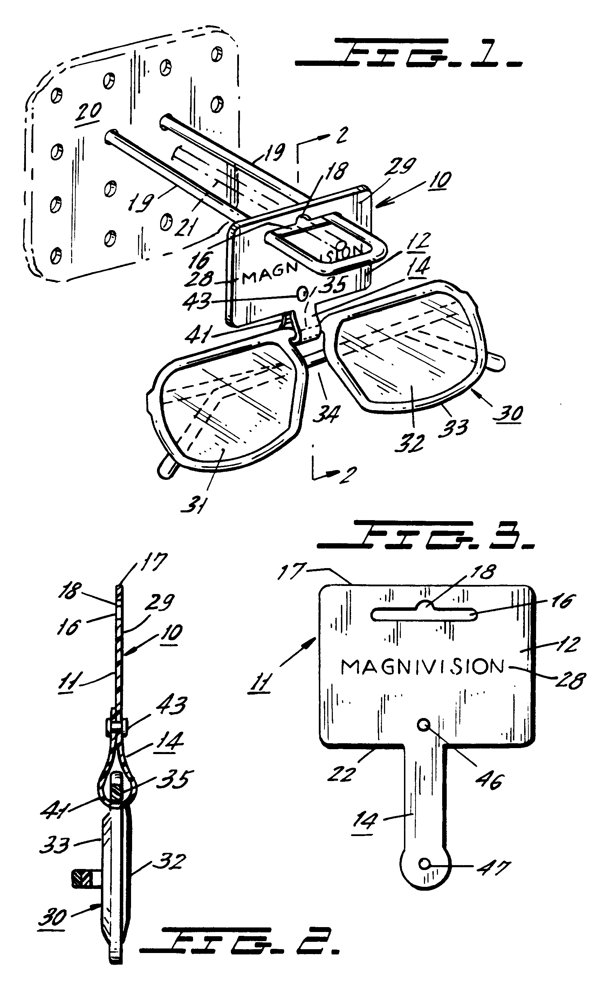

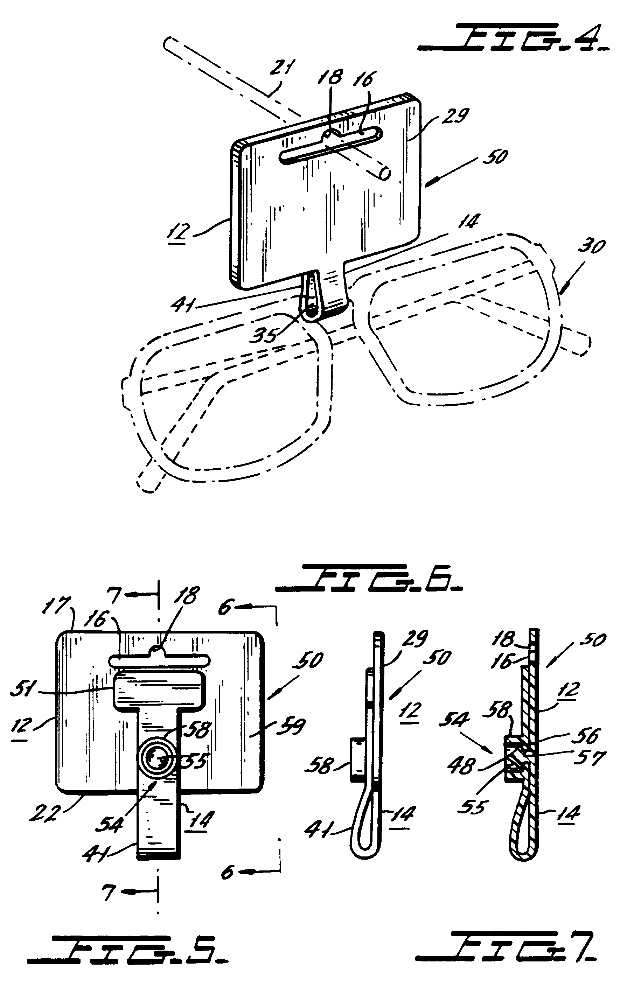

Now referring particularly to Figs. 1, 2 and 3. Hanger 10, constructed in accordance with a first embodiment of the instant invention, includes main element 11 (Fig. 3) which is a single sheet of relatively stiff resilient plastic material, typically a polythene. Element 11 consists of rectangular relatively wide main section or body 12 and relatively narrow extension 14. It is intended that front surface 29 of body 12 bear identifying indicia 28. Body 12 is provided with elongated aperture section 16 that is substantially longer than the width of extension 14, and is disposed in the vicinity of and extends parallel to edge 17. Centered between the ends of aperture section 16 and extending therefrom toward edge 17 is notch-like aperture section 18. Elongated section 16 is adapted to receive a cantilevered support comprising spaced parallel arms 19, 19, which project horizontally from wall 20, while notch section 18 is adapted to receive a cantilevered support consisting of single horizontal arm 21. Extension 14 is centered along edge 22 of main section 12 and is centered with respect to the length of aperture 16. Edge 17 is parallel to edge 22 and prior to formation of loop 41 (Fig. 2), the entire extension 14 projects from edge 22 away from edge 17.

Non-prescription eyeglasses 30 is a try-on article that includes lenses 31, 32 which are positioned by frame 33 with nose gap 34 therebetween. Bridge 35 of frame 33 extends across gap 34 at the upper end thereof. Extension 14 runs through gap 34 and is reversely bent to form loop 41 that encircles bridge 35. Loop 41 is maintained closed by fastening means in the form of metal rivet 43 which extends through aperture 46 in main section 12 and aperture 47 in extension 14 near the free end thereof.

Hanger 10 and eyeglasses 30 are proportioned so that they cannot be separated without opening loop 41. That is, the portions of frame 33 that surround lenses 31, 32 are too large to pass through loop 41. However, there is sufficient play between hanger 10 and eyeglasses 30 to permit a customer to try on the latter without removing hanger 10. When eyeglasses 30 are being fitted, main section 12 is intended to be in front of the customer's forehead in a position that does not interfere with the customer's view or effect positioning of eyeglasses 30.

While the Fig. 1 illustrates only a single pair of eyeglasses 30 and its hanger 10 mounted on support arms 19, 19, it should now be apparent to those skilled in the display art that support arms 19, 19 and/or 21 are intended to support a plurality of pairs of eyeglasses 30 each secured to an individual hanger 10. It should also now be apparent to those skilled in the art that loop 41 need not be formed integrally with body 12, but can be formed by a separate member (not shown) that is attached to body 12 by fastening means which may be the same rivet 43 that is used to maintain loop 41 closed.

Now referring to Figs. 4 through 7 which illustrate a second embodiment of the instant invention. Where elements of the first and second embodiments are the same or substantially the same like reference numerals are used to indicate these elements in the drawings for both of the embodiments. In particular, hanger 50 of Figs. 4-7 is constructed of a moderately stiff yet flexible plastic material and consists of relatively wide rectangular main section or body 12, relatively narrow body extension 14 and fastening means 54. Typically, components 12, 14 and 54 are integrally formed by molding and/or stamping.

Extension 14 projects from the center of one of the long sides 22 of body 12. Narrow slot 16, to receive cantilever support elements 19, 19, is disposed adjacent the other long side 17 of body 12. Extension 14 is centered with respect to the length of slot 16 and extends away from edge 17. Fastening means 54 includes conical button 55 which is disposed slightly to the rear of body 12 near edge 22 and is connected thereto by shank 57 which extends to the base of button 55. The length of shank 57 is approximately equal to the thickness of body 12.

To form loop 41 around bridge 35 of eyeglasses 30, the free end of extension 14 is rearwardly bent and button 55 is forced through aperture 57 in extension 14 near transverse tab 51 which is at the free end of extension 14. Molded integrally with extension 14 is barrier 58 which surrounds button 55 when loop 41 is closed and is provided with an inside diameter which is equal approximately to the outer (base) diameter of button 55. The height of barrier 58 is equal approximately to the height of button 55 which is measured from its enlarged base to its rearward facomg relatively pointed apex or tip 48. Barrier 58 prevents pointed tip 48 from pressing into the forehead of a person who is trying on eyeglasses 30. The first time loop 41 is formed, considerable force is required to insert button 55 through aperture 57. Reinforcement provided by barrier 58 and the nature of the material from which hanger 50 is constructed are such that after the first time button 55 travels through aperture 57, loop 41 cannot be opened casually. However, after button 55 moves through aperture 57 in both directions, aperture 57 becomes enlarged to the extent that fastening means 54 no longer provides a secure connection between the free end of extension 14 and body 12.

Transverse tab 51, located at the free end of extension 14 and outboard of aperture 57, constitutes a grip to facilitate opening of the connection made by fastening means 54. While extension 14 is substantially narrower than slot 16, tab 51 is almost the length of slot 16. Even by gripping tab 51 considerable effort must be exerted for initial opening of loop 41.

Although the present invention has been described in connection with a preferred embodiment thereof, many other variations and modifications will now become apparent to those skilled in the art. It is preferred, therefore, that the present invention be limited not by the specific disclosure herein, but only by the appended claims.

## Claims

1. A display of non-prescription eye glasses (30) comprising:
a generally vertical support (20);
a plurality of generally horizontal cantilevered arms (19;21) each attached at one end to said support (20) and projecting outwardly therefrom;
a plurality of non-prescription eye glasses (30) each comprising a pair of lenses, foldable temples and interconnecting bridge means;
a plurality of hangers (10;50) by which said eye glasses (30) are suspended from said arms (19;21) with the lenses (31;32) of each said pair of eye glasses (30) spaced apart in a direction which extends generally horizontally and which is transverse to said arms (19;21), said suspended eye glasses (30) having their temples folded and the hangers (10;50) with the respective eye glasses (30) attached thereto being removable from said respective arms (19;21) and permitting the temples to be unfolded so that the eye glasses (30) can be tried on with the hangers (10;50) attached thereto;
characterised in that each arm (19;21) supports a plurality of eye glasses (30) of the same type and each hanger is formed of relatively flat sheet-like material and comprises an upper portion (12) engaged with the respective arm (19;21) in a manner permitting the hanger (10;50) with its respective eye glasses (30) to be slid along and removed from and replaced on said arm (19;21), and a lower portion (14) attached to said eye glasses (30) in a manner leaving the lenses (31;32) free of said lower portion (14) and permitting the temples to be unfolded without detaching the hanger (10;50) from the eye glasses (30) so that the eye glasses (30) may be tried on with the hanger (10;50) remaining attached thereto but without obscuring vision through the lenses (31;32).

2. A display according to claim 1, wherein the upper and lower portions (12;14) of each hanger (10;50) are integral with each other.

3. A pair of eye glasses (30) in combination with a hanger (10;50) for suspending the eye glasses (30) in a horizontal orientation from, and generally transverse to, a generally horizontal cantilevered arm (19;21) of a display rack (20) for forming a display according to claim 1,
the eye glasses comprising first and second lenses (31,32), foldable temples, and interconnecting bridge means (35);
the hanger (10;50) comprising a first portion (12) for bearing indicia and having therein opening means for suspending the hanger (10;50) from said cantilevered arm (19;21) and a second portion (14) which extends downwardly from the first portion (12) and encloses a portion (35) of said eye glasses (30) to secure the eye glasses to the hanger (10;50), said temples being outside said second portion (14) so that the temples may be opened and closed and said hanger (10;50) being constructed so that the eye glasses (30) may be tried on without removing the eye glasses (30) from the hanger (10;50) and with the first portion (12) of the hanger (10;50) positioned so as not to obscure vision through the lenses;
characterised in that said second portion (14) of the hanger (10;50) is in the form of a loop (41) which surrounds said interconnecting bridge means (35) leaving the lenses (31) free from said second portion (14), said loop being such as to prevent removal of the eye glasses (30) from the hanger (10;50) without opening the loop.

4. A pair of eye glasses (30) and a hanger (10;50) according to claim 3, characterised in that said second portion (14) of the hanger (10;50) is in the form of an extension which is narrow relative to the first portion (12) and projects from a bottom edge of the first portion (12), said extension (14) being bent to pass through the gap (34) between the lenses (31;31) to form the loop (41), and including fastening means (43;54) in engagement with the extension (14) to maintain the loop (41) closed.

5. A pair of eye glasses (30) and a hanger (10;50) as claimed in claim 4, characterised in that the extension (14) is formed integrally with the first portion (12) of the hanger (10;50).

6. A pair of eye glasses (30) and a hanger (10;50) as claimed in claim 5, characterised in that the first portion (12) of the hanger (10;50) and the extension (14) are sheet-like and constructed of plastics material that is resilient and is relatively stiff.

7. A pair of eye glasses (30) and a hanger (10;50) as claimed in Claim 6, characterised in that the plastic sheet material is a polythene.

8. A pair of eye glasses (30) and a hanger (10;50) as claimed in any one of claims 4 to 7, characterised in that the first portion (12) of the hanger (10;50) is substantially wider than the gap (34) and the extension (14) is slightly narrower than the gap (34).

9. A pair of eye glasses (30) and a hanger (10;50) as claimed in any one of claims 4 to 8, characterised in that the fastening means comprises a metal rivet (43) and the extension (14) must be severed to release the eye glasses (30) from the hanger means (10;50).

10. A pair of eye glasses (30) and a hanger (10;50) as claimed in any one of claims 4 to 8, characterised in that said fastening means (54) is formed integrally with said first portion (12) of the hanger (10;50) and said extension (14) and comprises cooperating first and second sections (55;57) which maintain said loop (41) closed when operatively engaged.

11. A pair of eye glasses (30) and a hanger (10;50) as claimed in claim 10, characterised in that said first section of said fastening means comprises a hole (57) and said second section of said fastening means comprises a button (55).

12. A pair of eye glasses (30) and a hanger (10;50) as claimed in claim 11, characterised in that the hole (57) is in said extension (14), said button (55) being disposed at the rear of the first portion (12) of the hanger (10;50) and connected thereto by a shank (56) that is disposed within said hole (57) when the first and second sections are operatively engaged.

13. A pair of eye glasses (30) and a hanger (10;50) as claimed in claim 11 or 12, characterised by reinforcing means (58) formed integrally with said first portion (12) of the hanger (10;50) and said extension, said reinforcing means (58) surrounding said hole (57) in close proximity thereto to impede operative disengagement between said first and second sections (55;57).

14. A pair of eye glasses (30) and a hanger (10;50) as claimed in claim 11, 12 or 13, characterised in that after disengagement of said button (55) from said hole (57) they can be re-engaged, but provide a less secure connection.

15. A pair of eye glasses (30) and a hanger (10;50) as claimed in claim 13 or 14, characterised in that the reinforcing means is constituted by a safety barrier (58) formed integrally with the extension (14) near its free end, said barrier (58) surrounding said button (55) when the first and second sections are opeartively engaged.

16. A pair of eye glasses (30) and a hanger (10;50) as claimed in any one of claims 10 to 15; characterised in that there is a transverse projection (51) formed integrally with said extension (14) at its free end, said projection (51) being disposed outwardly of said fastening means (55;57) and being provided as a gripping means to which a force can be applied to disengage said first and second sections of said fastening means.

17. A pair of eye glasses (30) and a hanger (10;50) as claimed in any one of claims 3 to 16, characterised in that the opening means (16) is in the form of a horizontally extending slot in said first portion (12) of the hanger (10;50).

18. A pair of eye glasses (30) and a hanger (10;50) as claimed in claim 17, characterised in that said first portion (12) of said hanger is generally rectangular and said slot (16) is parallel to an upper edge thereof.

## Patentansprüche

1. Display für nicht-verschriebene Brillen (30), mit:
einem insgesamt vertikalen Träger (20);
einer Anzahl insgesamt horizontal überkragender Arme (19; 21), die jeweils mit dem einen Ende am genannten Träger (20) angebracht sind und von diesem weg nach außen abstehen;
einer Anzahl nicht-verschriebener Brillen (30), die jeweils ein Paar Gläser, umklappbare Bügel und eine verbindende Brückeneinrichtung aufweisen;
einer Anzahl von Aufhängern (10; 50), mittels welcher die genannten Brillen (30) an den Armen (19; 21) aufgehängt sind, wobei die Gläser (31; 32) einer jeden genannten Brille (30) durch einen Abstand in einer Richtung getrennt sind, der sich insgesamt horizontal erstreckt und der quer zu den genannten Armen (19; 21) verläuft, wobei an den genannten aufgehängten Brillen (30) ihre Bügel eingeklappt sind und die Aufhänger (10; 50) mit den hieran angebrachten jeweiligen Brillen (30) von den genannten jeweiligen Armen (19; 21) entfernbar sind und es gestatten, daß die Bügel so aufgeklappt werden können, daß die Brillen (30) mit den hieran angebrachten Aufhängern (10; 50) anprobiert werden können;
dadurch **gekennzeichnet**, daß jeder Arm (19; 21) eine Vielzahl von Brillen (30) derselben Art trägt und jeder Aufhänger aus einem verhältnismäßig flachen, bahnartigen Material geformt ist und einen oberen Abschnitt (12) aufweist, der in den jeweiligen Arm (19; 21) auf eine Weise eingreift, die es gestattet, daß der Aufhänger (10; 50) mit seiner jeweiligen Brille (30) längs des genannten Armes (19; 21) verschoben, von diesem entfernt und auf diesen wieder zurückgesetzt werden kann, sowie einen unteren Abschnitt (14), der an der genannten Brille (30) auf eine Weise angebracht ist, die die Gläser (31; 32) frei vom genannten unteren Abschnitt (14) läßt und es gestattet, daß die Bügel aufgeklappt werden, ohne daß man den Aufhänger (10; 50) von der Brille (30) abnimmt, so daß die Brille (30) anprobiert werden kann, wobei die Aufhänger (10; 50) an ihnen angebracht bleiben, ohne aber die Sicht durch die Gläser (31; 32) zu verdecken.

2. Display nach Anspruch 1, worin der obere und der untere Abschnitt (12; 14) eines jeden Aufhängers (10; 50) miteinander einstückig ausgebildet sind.

3. Brille (30) in Kombination mit einem Aufhänger (10; 50) zum Aufhängen der Brille (30) in einer horizontalen Ausrichtung von und insgesamt quer zu einem insgesamt horizontalen, überkragenden Arm (19; 21) eines Displaygestells (20) zur Bildung eines Displays nach Anspruch 1,
wobei die Brille ein erstes und zweites Glas (31, 32), umklappbare Bügel und eine verbindende Brückeinrichtung (35) aufweist; und
wobei der Aufhänger (10; 50) einen ersten Abschnitt (12) zum Tragen von Vermerken, worin eine Öffnungseinrichtung zum Aufhängen des Aufhängers (10; 50) am überkragenden Arm (19; 21) vorliegt, sowie einen zweiten Abschnitt (14) aufweist, der sich vom ersten Abschnitt (12) aus nach unten erstreckt und einen Abschnitt (35) der genannten Brille (30) umschließt, um die Brille am Aufhänger (10; 50) zu befestigen, wobei die Bügel außerhalb des genannten zweiten Abschnitts (14) liegen, so daß die Bügel geöffnet und geschlossen werden können und der genannte Aufhänger (10; 50) so aufgebaut ist, daß die Brille (30) anprobiert werden können, ohne daß man die Brille (30) vom Aufhänger (10; 50) entfernt, wobei der erste Abschnitt (12) des Aufhängers (10; 50) so angeordnet ist, daß er die Sicht durch die Gläser nicht verdeckt;
dadurch **gekennzeichnet**, daß der genannte zweite Abschnitt (14) des Aufhängers (10; 50) die Form einer Schlaufe (41) aufweist, die die genannte, verbindende Brückeneinrichtung (35) umgibt und dabei die Gläser (31) vom genannten zweiten Abschnitt (14) frei läßt, wobei die genannte Schlaufe so ausgebildet ist, daß sie die Entfernung der Brille (30) vom Aufhänger (10; 50) ohne Öffnen der Schlaufe verhindert.

4. Brille (30) und Aufhänger (10; 50) nach Anspruch 3, dadurch **gekennzeichnet**, daß der genannte zweite Abschnitt (14) des Aufhängers (10; 50) in Form einer Verlängerung ausgebildet ist, die im Verhältnis zum ersten Abschnitt (12) schmal ist und von einer Unterkante des ersten Abschnitts (12) absteht, wobei die genannte Verlängerung (14) so gebogen ist, daß sie durch den Spalt (34) zwischen den Gläsern (31; 31) hindurchtritt, um die Schlaufe (41) zu bilden, und eine Befestigungseinrichtung (43; 54) in Eingriff mit der Verlängerung (14) umfaßt, um die Schlaufe (41) geschlossen zu halten.

5. Brille (30) und Aufhänger (10; 50) nach Anspruch 4, dadurch **gekennzeichnet**, daß die Verlängerung (14) einstückig mit dem ersten Abschnitt (12) des Aufhängers (10; 50) ausgebildet ist.

6. Brille (30) und Aufhänger (10; 50) nach Anspruch 5, dadurch **gekennzeichnet**, daß der erste Abschnitt (12) des Aufhängers (10; 50) und die Verlängerung (14) bogenartig sind und aus einem Kunststoff aufgebaut sind, der federnd und verhältnismäßig steif ist.

7. Brille (30) und Aufhänger (10; 50) nach Anspruch 6, dadurch **gekennzeichnet**, daß der Kunststoff ein Polyethylen ist.

8. Brille (30) und Aufhänger (10; 50) nach irgendeinem der Ansprüche 4 bis 7, dadurch **gekennzeichnet**, daß der erste Abschnitt (12) des Aufhängers (10; 50) wesentlich breiter ist als der Spalt (34) und die Verlängerung (14) geringfügig schmaler ist als der Spalt (34).

9. Brille (30) und Aufhänger (10; 50) nach irgendeinem der Ansprüche 4 bis 8, dadurch **gekennzeichnet**, daß die Befestigungseinrichtung eine Metallniete (43) umfaßt und die Verlängerung (14) abgetrennt werden muß, um die Brille (30) von der Aufhängereinrichtung (10; 50) freizusetzen.

10. Brille (30) und Aufhänger (10; 50) nach irgendeinem der Ansprüche 4 bis 8, dadurch **gekennzeichnet**, daß die Befestigungseinrichtung (54) einstückig mit dem genannten ersten Abschnitt (12) des Aufhängers (10; 50) und der Verlängerung (14) ausgebildet ist und einen zusammenwirkenden ersten und zweiten Abschnitt (55; 57) aufweist, die die genannte Schlaufe (41) geschlossen halten, wenn sie in betrieblichem Eingriff stehen.

11. Brille (30) und Aufhänger (10; 50) nach Anspruch 10, dadurch **gekennzeichnet**, daß der genannte erste Abschnitt der genannten Befestigungseinrichtung ein Loch (57) und der genannte zweite Abschnitt der genannten Befestigungseinrichtungen einen Knopf (55) aufweist.

12. Brille (30) und Aufhänger (10; 50) nach Anspruch 11, dadurch **gekennzeichnet**, daß das Loch (57) in der genannten Verlängerung (14) liegt und der genannte Knopf (55) an der Rückseite des ersten Abschnitts (12) des Aufhängers (10; 50) angeordnet und hiermit durch einen Schaft (56) verbunden ist, der innerhalb des genannten Lochs (57) angeordnet ist, wenn der erste und zweite Abschnitt in betrieblichem Eingriff stehen.

13. Brille (30) und Aufhänger (10; 50) nach Anspruch 11 oder 12, **gekennzeichnet** durch eine Verstärkungseinrichtung (58), die einstückig mit dem genannten ersten Abschnitt (12) des Aufhängers (10; 50) und der genannten Verlängerung ausgebildet ist, wobei die genannte Verstärkungseinrichtung (58) das genannte Loch (57) in enger Nähe hierzu umgibt, um im Betrieb das Lösen des Eingriffs zwischen dem ersten und dem zweiten Abschnitt (55; 57) zu behindern.

14. Brille (30) und Aufhänger (10; 50) nach Anspruch 11, 12 oder 13, dadurch **gekennzeichnet**, daß nach dem Lösen des Eingriffs des genannten Knopfes (55) mit dem genannten Loch (57) diese wieder erneut in Eingriff gebracht werden können, aber eine weniger sichere Verbindung liefern.

15. Brille (30) und Aufhänger (10; 50) nach Anspruch 13 oder 14, dadurch **gekennzeichnet**, daß die Verstärkungseinrichtung von einer Sicherheitsbarriere (58) gebildet ist, die einstückig mit der Verlängerung (14) nahe deren freiem Ende ausgebildet ist, wobei die genannte Sperre (58) den genannten Knopf (55) umgibt, wenn der erste und zweite Abschnitt in betrieblichem Eingriff stehen.

16. Brille (30) und Aufhänger (10; 50) nach irgendeinem der Ansprüche 10 bis 15, dadurch **gekennzeichnet**, daß ein quer verlaufender Vorsprung (51) einstückig mit der genannten Verlängerung (14) an deren freiem Ende ausgebildet ist, wobei der genannte Vorsprung (51) auswärts der genannten Befestigungseinrichtung (55; 57) angeordnet und als Greifeinrichtung vorgesehen ist, an welche eine Kraft angelegt werden kann, um den Eingriff des ersten und zweiten Abschnitts der genannten Befestigungseinrichtung zu lösen.

17. Brille (30) und Aufhänger (10; 50) nach irgendeinem der Ansprüche 3 bis 16, dadurch **gekennzeichnet**, daß die Öffnungseinrichtung (16) in Form eines sich horizontal erstreckenden Schlitzes im genannten ersten Abschnitt (12) des Aufhängers (10; 50) ausgebildet ist.

18. Brille (30) und Aufhänger (10; 50) nach Anspruch 17, dadurch **gekennzeichnet**, daß der genannte erste Abschnitt (12) des genannten Aufhängers insgesamt rechteckig ist und der genannte Schlitz (16) parallel zu einer oberen Kante hiervon verläuft.

## Revendications

1. Présentoir de lunettes de non-prescription, (30), comprenant:
un support (20) généralement vertical;
une pluralité de bras en porte-à-faux (19; 21) généralement horizontaux, chacun d'entre eux étant fixé par une extrémité audit support (20) et faisant saillie vers l'extérieur de ce dernier;
une pluralité de lunettes de non-prescription (30), chacune d'entre elles comprenant un couple de lentilles, des branches pliables et une barrette de liaison ;
une pluralité d'organes d'accrochage (10; 50) grâce auxquels lesdites lunettes (30) sont suspendues auxdits bras (19; 21), les lentilles (31; 32) de chacune des lunettes (30) étant espacées dans une direction qui s'étend généralement horizontalement et de façon transversale par rapport auxdits bras (19; 21), lesdites lunettes (30) suspendues présentant leurs branches pliées, les organes d'accrochage (10; 50), auxquels sont fixées les lunettes (30) respectives, pouvant être retirés desdits bras (19; 21) respectifs en permettant aux branches dépliées, de manière que les lunettes (30) puissent être essayées avec les organes d'accrochage (10; 50) fixés à ces dernières;
caractérisé en ce que chaque bras (19; 21) supporte une pluralité de lunettes (30) du même type et chaque organe d'accrochage est constitué d'un matériau en forme de feuille relativement plane et comprend une partie supérieure (12) en contact avec le bras (19; 21) correspondant, de manière à permettre à l'organe d'accrochage (10; 50) avec ses lunettes (30) correspondantes, de coulisser le long de et d'être retiré et remplacé sur ledit bras (19; 21) et une partie inférieure (14), fixée auxdites lunettes (30), de manière à libérer les lentilles (31; 32) de ladite partie inférieure (14) et à permettre aux branches d'être dépliées sans détacher l'organe d'accrochage (10; 50), afin que les lunettes (30) puissent être essayées avec l'organe d'accrochage (10; 50) qui reste fixé, à ce dernier, mais sans entraver la vision à travers les lentilles (31; 32).

2. Présentoir selon la revendication 1, dans lequel les parties supérieure et inférieure (12; 14) de chaque organe d'accrochage (10; 50) sont réalisées d'un seul tenant l'une avec l'autre.

3. Paire de lunettes (30) associée à un organe d'accrochage (10; 50), pour suspendre ces lunettes (30) selon une orientation horizontale et généralement transversale par rapport à un bras en porte-à-faux (19; 21) généralement horizontal d'un râtelier de présentoir (20), afin de constituer un présentoir selon la revendication 1,
les lunettes comprenant des première et seconde lentilles (31, 32), des branches pliables et une barrette de liaison (35);
l'organe d'accrochage (10; 50) comprenant une première partie (12) pour supporter un indice et comportant
un moyen d'ouverture pour suspendre l'organe d'accrochage (10; 50) audit bras en porte-à-faux (19; 21), et une seconde partie (14) qui s'étend vers le bas depuis la première partie (12) pour enfermer une région (35) desdites lunettes (30), afin de les fixer audit organe d'accrochage (10; 50), lesdites branches étant situées à l'extérieur de ladite seconde partie (14) de manière à pouvoir s'ouvrir et se fermer, ledit organe d'accrochage (10; 50) étant conforme de manière que les lunettes (30) puissent être essayées sans avoir à les retirer de l'organe d'accrochage (10; 50), la première partie (12) de cet organe d' accrochage (10; 50) étant disposée de manière à ne pas entraver la vision à travers les lentilles;
caractérisée en ce que ladite seconde partie (14) de l'organe d'accrochage (10; 50) se présente sous la forme d'une boucle (41) qui entoure la barrette de liaison (35), en libérant les lentilles (31) de ladite seconde partie (14), ladite boucle permettant d'empêcher l'enlèvement des lunettes (30) de l'organe d'accrochage (10; 50), à moins d'ouvrir la boucle.

4. Paire de lunettes (30) et organe d'accrochage (10; 50) selon la revendication 3, caractérisés en ce que ladite seconde partie (14) de l'organe d'accrochage (10; 50) se présente sous la forme d'une extension qui est relativement étroite par rapport à la première partie (12) et fait saillie depuis un bord inférieur de cette première partie (12), ladite extension (14) étant pliée de manière à passer par l' espace (34) existant entre les lentilles (31; 31), pour former la boucle (41) et comprenant des moyens de fixation (43; 54), en contact avec l'extension (14) pour maintenir la boucle (41) fermée.

5. Paire de lunettes (30) et organe d'accrochage (10; 50) selon la revendication 4, caractérisés en ce que l'extension (14) est réalisée d'un seul tenant avec la première partie (12) de l'organe d'accrochage (10; 50).

6. Paire de lunettes (30) et organe d'accrochage (10; 50) selon la revendication 5, caractérisés en ce que la première partie (12) de l'organe d'accrochage (10; 50) et l'extension (14) sont en forme de feuilles et construites en matériau synthétique élastique, relativement rigide.

7. Paire de lunettes (30) et organe d'accrochage (10; 50) selon la revendication 6, caractérisés en ce que le matériau en forme de feuille est un polythène.

8. Paire de lunettes (30) et organe d'accrochage (10; 50) selon l'une quelconque des revendications 4 à 7, caractérisés en ce que la première partie (12) de l'organe d'accrochage (10; 50) est sensiblement plus large que l' espace (34) et l'extension (14) est légèrement plus étroite que cet espace.

9. Paire de lunettes (30) et organe d'accrochage (10; 50) selon l'une quelconque des revendications 4 à 8, caractérisés en ce que le moyen de fixation comprend un rivet métallique (43), l'extension (14) devant être détachée pour libérer les lunettes (30) de l'organe d' accrochage (10 ; 50).

10. Paire de lunettes (30) et organe d'accrochage (10; 50) selon l'une quelconque des revendications 4 à 8, caractérisés en ce que ledit moyen de fixation (54) est réalisé d'un seul tenant avec ladite première partie (12) de cet organe d'accrochage (10; 50) et ladite extension (14), et comprend des première et seconde sections (55; 57) qui coopèrent pour maintenir ladite boucle (41) fermée, lorsqu'elles sont en contact.

11. Paire de lunettes (30) et organe d'accrochage (10; 50) selon la revendication 10, caractérisés en ce que ladite première section du moyen de fixation comprend un trou (57) et ladite seconde section un bouton (55).

12. Paire de lunettes (30) et organe d'accrochage (10; 50) selon la revendication 11, caractérisés en ce que le trou (57) est ménagé dans ladite extension (14), ledit bouton (55) étant disposé à l'arrière de la première partie (12) de l'organe d'accrochage (10; 50) et étant relié à cette dernière par un fût (56), qui est disposé dans ledit trou (57) lorsque les première et seconde sections sont en contact.

13. Paire de lunettes (30) et organe d'accrochage (10; 50) selon la revendication 11 ou 12, caractérisés par un moyen de renforcement (58) réalisé d'un seul tenant avec ladite première partie (12) de l'organe d'accrochage (10; 50) et ladite extension, ledit moyen de renforcement (58) entourant ledit trou (57) à proximité immédiate de ce dernier, pour empêcher un écartement en fonctionnement entre lesdites première et seconde sections (55; 57).

14. Paire de lunettes (30) et organe d'accrochage (10; 50) selon la revendication 11, 12 ou 13, caractérisés en ce qu'après l'écartement dudit bouton (55) depuis ledit trou (57), ils peuvent être remis en contact, mais ils fournissent une liaison moins sûre.

15. Paire de lunettes (30) et organe d'accrochage (10; 50) selon la revendication 13 ou 14, caractérisés en ce que le moyen de renforcement est constitué d'une barrière de sûreté (58) réalisée d'un seul tenant avec l'extension (14), à proximité de son extrémité libre, ladite barrière (58) entourant ledit bouton (55) lorsque les première et seconde sections sont mises en contact.

16. Paire de lunettes (30) et organe d'accrochage (10; 50) selon l'une quelconque des revendications 10 à 15, caractérisés en ce qu' une saillie transversale (51) réalisée d'un seul tenant avec ladite extension (14) à son extrémité libre est disposée à l'extérieur desdits moyens de fixation (55; 57) et est prévue pour servir de moyen de maintien auquel une force peut être appliquée pour écarter lesdites première et seconde sections desdits moyens de fixation.

17. Paire de lunettes (30) et organe d'accrochage (10; 50) selon l'une quelconque des revendications 3 à 16, caractérisés en ce que le moyen d'ouverture (16) se présente sous la forme d'une fente s'étendant horizontalement dans ladite première partie (12) de l'organe d'accrochage (10; 50).

18. Paire de lunettes (30) et organe d'accrochage (10; 50) selon la revendication 17, caractérisés en ce que ladite première partie (12) dudit organe d'accrochage est généralement rectangulaire et ladite fente (16) est parallèle à son bord supérieur.
